# DEMANDE DE BREVET EUROPEEN

(11) **EP 3 682 773 A1**
(43) Date de publication de la demande: **22.07.2020**
(21) Numéro de dépôt: 20151006.2
(22) Date de dépôt: 09.01.2020
(51) Int. Cl.: A47J 31/36, A47J 31/44

(54) **MACHINE DE PRÉPARATION DE BOISSONS MUNIE D'UN BAC À CAPSULES USAGÉES PERFECTIONNÉ**

(30) Priorité: 18.01.2019 FR 1900462
(71) Demandeur: SEB S.A., 69130 Ecully (FR)
(72) Inventeur: GEROULT, Marc, 72610 OISSEAU-LE-PETIT (FR); AVOIE, Fabrice, 49070 BEAUCOUZE (FR)
(74) Mandataire: Bourrières, Patrice

(57) **Abrégé**

L'invention concerne une machine de préparation de boissons (1) à partir d'un ingrédient contenu dans une capsule comprenant une unité (8) de préparation de boisson conçue pour accueillir, utiliser la capsule puis évacuer la capsule après usage et un bac (10) ayant une cavité formant un espace de stockage (11) pour collecter les capsules usagées, ladite machine de préparation de boissons (1) comportant un bâti (2) muni d'un logement (41) dans lequel le bac (10) est mobile entre une position insérée à l'intérieur dudit bâti (2) dans laquelle le bac (10) collecte les capsules usagées et une position retirée dudit bâti (2) dans laquelle le bac (10) est manipulable pour vider les capsules usagées collectées. Conformément à l'invention, le bac (10) comporte un volet (30) mobile en rotation entre une position de collecte dans laquelle le volet (30) réduit l'espace de stockage (11) du bac (10) lorsque le bac (10) est dans la position insérée dans le bâti (2) et une position d'évacuation dans laquelle le volet (30) augmente l'espace de stockage (11) du bac (10) lorsque le bac (10) est dans la position retirée du bâti (2).

## Description

La présente invention se rapporte au domaine technique général des machines de préparation de boissons à partir d'au moins un ingrédient contenu dans une capsule, notamment des machines à café automatiques pour réaliser des préparations à base de lait et/ou de café.

On connait du document EP2241230 une machine de préparation de boissons à partir d'un ingrédient contenu dans une capsule comprenant une unité de préparation de boissons conçue pour accueillir, utiliser la capsule puis évacuer la capsule après usage et un bac ayant une cavité formant un espace de stockage pour collecter les capsules usagées, la machine de préparation de boissons comportant un bâti dans lequel le bac est mobile entre une position insérée à l'intérieur du bâti dans laquelle le bac collecte les capsules usagées et une position retirée du bâti dans laquelle le bac est manipulable pour vider les capsules usagées collectées.

La machine comprend un moyen pour réduire l'espace de stockage du bac lorsque le bac est inséré dans le bâti en position de collecte et pour augmenter l'espace de stockage du bac en position d'évacuation lorsque le bac est retiré du bâti. Le niveau de remplissage peut donc diminuer dans le bac lors de son retrait du bâti pour éviter un blocage si le niveau de remplissage s'étend au-dessus du bac. En effet, on évite que les capsules collectées qui dépassent au-dessus du bac interfèrent avec le bâti lors du retrait du bac.

Dans un mode de réalisation décrit dans ce document, le bac comporte une paroi de fond mobile en translation verticale entre la position de collecte et la position d'évacuation. La machine comporte un dispositif de monte et baisse de la paroi de fond pour la faire passer de la position de collecte et la position d'évacuation. Une telle machine munie d'un tel dispositif de monte et baisse de la paroi de fond du bac à capsules usagées présente une conception complexe et chère à mettre en œuvre.

De plus, pour pouvoir retirer le bac, l'utilisateur doit manipuler ou faire manipuler par la machine le dispositif de monte et baisse de la paroi de fond du bac à capsules usagées.

Le but de la présente invention est de remédier aux inconvénients précités et de proposer une machine de préparation de boissons qui soit de conception simple et économique à mettre en œuvre
Un autre but de l'invention est de proposer une machine de préparation de boissons qui présente une ergonomie améliorée.

Ces buts sont atteints avec une machine de préparation de boissons à partir d'un ingrédient contenu dans une capsule comprenant une unité de préparation de boisson conçue pour accueillir, utiliser la capsule puis évacuer la capsule après usage et un bac ayant une cavité formant un espace de stockage pour collecter les capsules usagées, ladite machine de préparation de boissons comportant un bâti muni d'un logement dans lequel le bac est mobile entre une position insérée à l'intérieur dudit bâti dans laquelle le bac collecte les capsules usagées et une position retirée dudit bâti dans laquelle le bac est manipulable pour vider les capsules usagées collectées, caractérisée en ce que le bac comporte un volet mobile en rotation entre une position de collecte dans laquelle le volet réduit l'espace de stockage du bac lorsque le bac est dans la position insérée dans le bâti et une position d'évacuation dans laquelle le volet augmente l'espace de stockage du bac lorsque le bac est dans la position retirée du bâti.

L'espace de stockage augmente lorsque le bac passe de la position insérée à la position retirée. Le niveau de remplissage peut donc diminuer dans le bac lors de son retrait du bâti pour éviter un blocage si le niveau de remplissage s'étend au-dessus du bac. En effet, on évite que les capsules collectées qui dépassent au-dessus du bac interfèrent avec le bâti lors du retrait du bac.

Le volet est agencé sur le bac pour former un ensemble qui peut être inséré ou retiré du bâti sans mettre en œuvre d'autre dispositif sur la machine de distribution de boissons.

Par capsule ou dosette, on comprend un conditionnement jetable comportant une enveloppe fermée rigide ou souple, perméable ou imperméable contenant un ou plusieurs ingrédients.

De manière avantageuse, le bac est agencé sous l'unité de préparation de boissons de telle sorte que les capsules usagées tombent par gravité dans l'espace de stockage.

Avantageusement, la pression exercée par les capsules usagées sur le volet fait basculer automatiquement le volet de la position de collecte à la position d'évacuation lors du retrait du bac du logement du bâti.

Ainsi, la construction du bac muni du volet est particulièrement simple et économique.

De préférence, le volet comporte un organe d'appui et le logement comporte une paroi arrière, l'organe d'appui coopérant avec la paroi arrière pour faire passer le volet de la position de collecte à la position d'évacuation ou réciproquement. Une telle conception est particulièrement simple et économique à mettre en œuvre.

Avantageusement, l'organe d'appui est formé par une zone incurvée du volet. Une telle zone incurvée facilite le glissement du volet sur la paroi arrière du bâti lors de l'insertion ou du retrait du bac du bâti.

De préférence, le volet est mobile en rotation autour d'un axe α et le bac est mobile en translation le long d'un axe β, les axes α et β étant perpendiculaires.

De manière avantageuse, la machine de distribution de boissons s'étend entre une face avant et une face arrière selon une direction longitudinale, l'axe β étant parallèle à la direction longitudinale.

De préférence, le bac comporte un fond et l'axe α est agencé à proximité du fond. Par l'axe α est agencé à proximité du fond, on comprend que l'axe α est agencé à une distance du fond comprise entre un et vingt millimètres.

De manière avantageuse le fond est plan et l'axe α est parallèle au fond.

Avantageusement, le volet comporte un centre de gravité et l'axe α est agencé de manière déportée par rapport au centre de gravité pour faire basculer le volet en position d'évacuation sous l'action de son propre poids.

Ainsi, le volet bascule automatiquement de la position de collecte à la position d'évacuation lors du retrait du bac du bâti.

De préférence, le fond est muni d'un retour de matière qui s'étend vers le haut et le volet comporte une partie basse, la partie basse venant en appui sur le retour de matière pour maintenir le volet en position de collecte.

Avantageusement, le bac comporte une zone de préhension agencée à l'avant dudit bac et le volet forme une paroi arrière dudit bac.

Ainsi, le bac dans la position insérée présente un espace de stockage proche de l'espace disponible dans le bâti.

De préférence, le volet comporte deux parois latérales qui sont agencées le long de deux parois latérales du bac dans la position de collecte et qui s'étendent au-delà des deux parois latérales du bac dans la position d'évacuation.

Ainsi, dans la position d'évacuation, les deux parois latérales du volet prolongent les deux parois latérales du bac pour obtenir un espace de stockage augmenté présentant une ouverture uniquement vers le haut.

De manière avantageuse, au moins une paroi latérale du bac comporte un organe de butée et au moins une paroi latérale du volet comporte une patte, la patte venant en appui sur l'organe de butée pour maintenir le volet en position d'évacuation.

De préférence, le bac comporte un fond muni d'au moins une perforation et en ce que le bac est agencé au-dessus d'un réservoir.

Un tel réservoir est destiné à collecter les liquides qui peuvent s'échapper des capsules usagées.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
[Fig 1] La figure 1 est une vue en perspective d'une machine de préparation de boissons selon un mode particulier de réalisation de l'invention,
[Fig 2] La figure 2 est une vue en coupe suivant le plan de coupe II de la machine de préparation de boissons illustrée à la figure 1,
[Fig 3] La figure 3 est une vue en perspective du bac et du réservoir de la machine de préparation de boissons illustrée à la figure 2, le volet étant dans la position de collecte
[Fig 4] La figure 4 est une vue en perspective du bac et du réservoir de la machine de préparation de boissons illustrée à la figure 2, le volet étant dans la position d'évacuation.

On notera que, dans ce document, les termes «horizontal», «vertical», «inférieur», «supérieur», «longitudinal», «transversal», «haut», «bas», employés pour décrire la machine de préparation de boissons, font référence à cette machine en situation d'usage, lorsqu'elle est posée sur un plan horizontal.

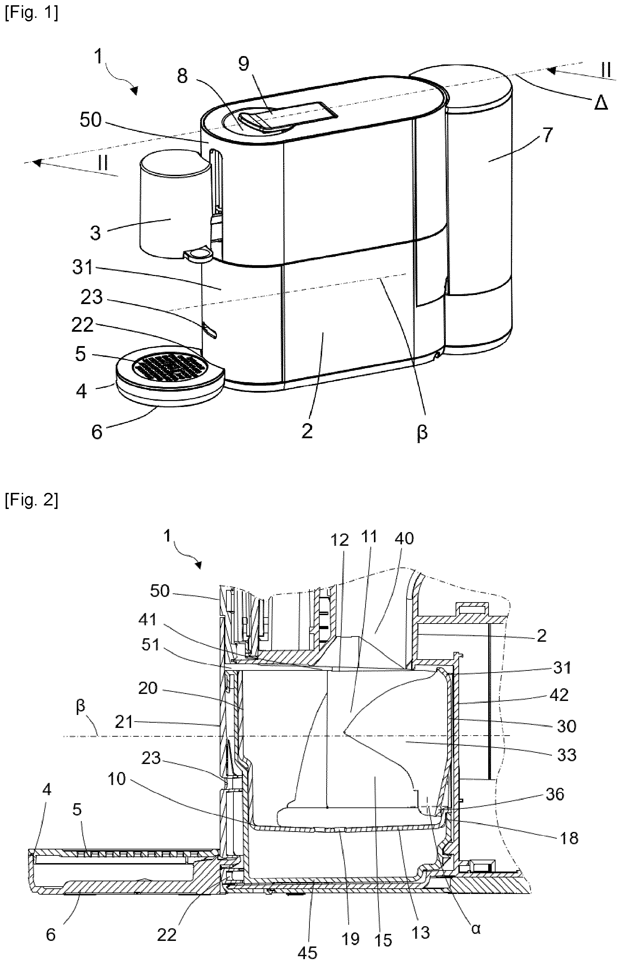

Tel que visible à la figure 1, une machine de préparation de boissons 1 comporte un bâti 2, une tête 3 de distribution de boissons et un support 4 de récipient sur lequel un récipient peut être disposé. Le support 4 de récipient peut par exemple comporter une grille 5 de support et un bac récolte-gouttes 6.

La machine de préparation de boissons 1 comporte un réservoir d'eau froide 7, une chaudière (non représentée sur les figures) et une unité 8 de préparation de boissons alimentée en eau chaude par la chaudière. L'unité 8 de préparation de boissons comporte un levier 9 d'ouverture et de fermeture de l'unité 8 de préparation de boissons pour l'insertion d'une capsule, notamment d'une capsule de café. La machine de préparation de boissons 1 comporte une pompe (non représentée sur les figures) destinée à faire circuler de l'eau chaude à travers la capsule agencée dans l'unité 8 de préparation de boissons.

Tel que visible à la figure 2, la machine de préparation de boissons 1 comporte un bac 10 agencé sous l'unité 8 de préparation de boissons. Le bac 10 présente une cavité qui forme un espace de stockage 11 des capsules usagées. Le bac 10 comporte une ouverture supérieure 12. Le bâti 2 comporte une goulotte 40 de transfert de la capsule usagée de l'unité 8 de préparation de boissons vers le bac 10 à travers l'ouverture supérieure 12.

Le bâti 2 comporte un logement 41 de réception du bac 10. Le bac 10 est agencé dans le logement 41 de manière mobile en translation le long d'un axe β. La machine de préparation de boissons 1 comporte une face avant 50 et le bâti 2 comprend sur cette face avant 50 une ouverture 51 qui donne l'accès au logement 41. L'ouverture 51 est ajustée à la taille du bac 10 pour permettre son insertion ou son retrait du logement 41. La machine de préparation de boissons 1 s'étend depuis la face avant 50 selon une direction longitudinale Δ (Fig.1), l'axe β étant parallèle à la direction longitudinale Δ. Le bac 10 est mobile entre une position insérée à l'intérieur du logement 41 dans laquelle le bac 10 collecte les capsules usagées et une position retirée du logement 41 dans laquelle le bac 10 est manipulable pour vider les capsules usagées collectées.

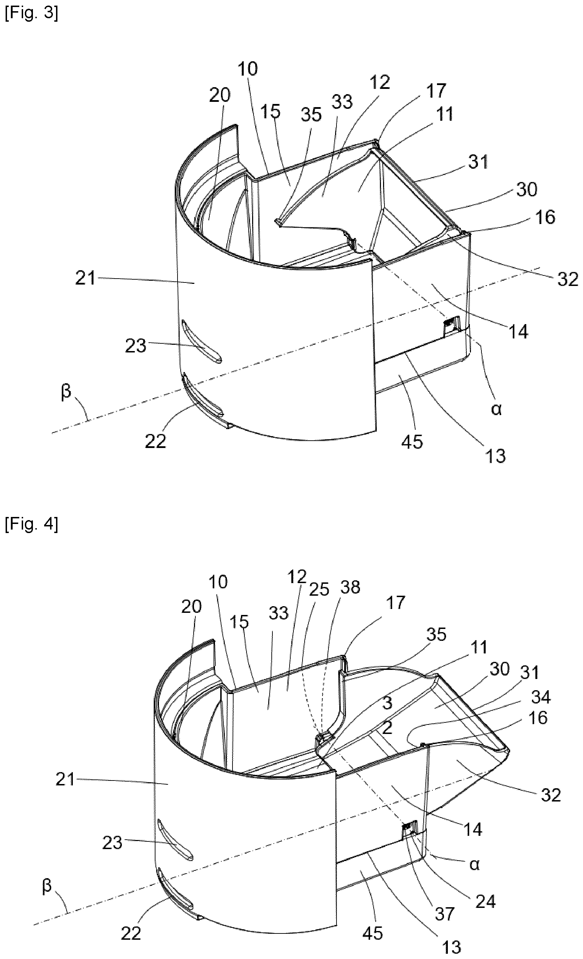

Conformément aux figures 2 à 4, le bac 10 comporte un volet 30 pivotant autour d'un axe α qui est perpendiculaire à l'axe β. Le volet 30 est mobile en rotation entre une position de collecte (Fig.2 et 3) dans laquelle le volet 30 réduit l'espace de stockage 11 lorsque le bac 10 est dans la position insérée dans le logement 41, et une position d'évacuation (Fig.4) dans laquelle le volet 30 augmente l'espace de stockage 11 lorsque le bac 10 est dans la position retirée du logement 41.

Le bac 10 comporte un fond 13 sensiblement compris dans un plan horizontal et l'axe α est agencé à proximité du fond 10, de manière parallèle au plan horizontal. Le volet 30 forme une paroi arrière du bac 10. Le volet 30 comporte un organe d'appui 31 et le logement 41 du bâti 2 comporte une paroi arrière 42. L'organe d'appui est formé par une zone incurvée 31 du volet 30 qui coopère avec la paroi arrière 42 du logement 41 pour faire passer le volet 30 de la position de collecte à la position d'évacuation et réciproquement. Le volet 30 comporte un centre de gravité qui est agencé de manière déportée par rapport à l'axe α, vers l'arrière du bac 10. Ainsi, le volet 30 tend à basculer en position d'évacuation sous l'action de son propre poids. Dans la position insérée du bac 10, l'organe d'appui 31 est amené automatiquement au contact de la paroi arrière 42.

Le volet 30 comporte deux parois latérales 32, 33 qui sont agencées le long de deux parois latérales 14, 15 du bac 10. Dans la position de collecte (Fig.3), les deux parois latérales 32, 33 du volet 30 s'étendent à l'intérieur du bac 10, le long des deux parois latérales 14, 15 du bac 10. Dans la position d'évacuation (Fig.4), les deux parois latérales 32, 33 du volet 30 prolongent les deux parois latérales 14, 15 du bac 10 pour fermer latéralement l'espace de stockage 11 qui ne présente ainsi qu'une ouverture supérieure 12.

Chaque paroi latérale 32, 33 du volet 30 comporte un arbre 37, 38 (Fig.4) qui coopère avec une ouverture traversante 24, 25 agencée dans chaque paroi latérale 14, 15 du bac 10. De manière avantageuse, le volet 30 peut être démonté du bac 10. L'utilisateur peut retirer par exemple l'arbre 37 de l'ouverture traversante 24 en jouant sur l'élasticité du volet 30, une fois celui-ci en position d'évacuation. Ainsi, le nettoyage du bac 10 et du volet 30 est facilité.

Chaque paroi latérale 14, 15 du bac 10 comporte un organe de butée 16, 17 formé par un retour de matière et chaque paroi latérale 32, 33 du volet 30 comporte une patte 34, 35, chaque patte 34, 35 venant respectivement en appui sur chaque organe de butée 16, 17 pour maintenir le volet 30 en position d'évacuation.

Le fond 13 comprend un retour de matière 18 (Fig.2) qui s'étend vers le haut et le volet 30 comporte une partie basse 36 qui s'étend sous l'axe α, la partie basse 36 venant en appui sur le retour de matière 18 pour maintenir le volet 30 en position de collecte. Dans la position de collecte, le volet 30 est sensiblement vertical et dans la position d'évacuation, le volet 30 est incliné par rapport à un plan horizontal d'une valeur angulaire de 45°.

Le bac 10 est agencé au-dessus d'un réservoir 45 de collecte des liquides qui peuvent s'échapper des capsules usagées. Le fond 13 du bac 10 comporte des perforations 19 (Fig.2) à travers lesquelles les liquides peuvent passer vers le réservoir 45. Le bac 10 comporte une paroi avant 20 qui est agencée de manière amovible sur une plaque incurvée 21. Le réservoir 45 est également agencé de manière amovible sur la plaque incurvée 21. La plaque incurvée forme une zone de préhension 21 du bac 10 pour permettre à l'utilisateur de l'insérer ou le retirer du logement 41. Le logement 41 est dimensionné pour recevoir le bac 10 et le réservoir 21.

La plaque incurvée 21 comporte une ouverture supérieure 23 et une ouverture inférieure 22 qui sont agencées l'une au-dessus de l'autre. L'ouverture inférieure 22 et l'ouverture supérieure 23 forment chacune une zone d'accroché du support 4 de récipient. Le support 4 de récipient est ainsi déplaçable verticalement entre une position haute dans laquelle un récipient de petite taille, tel qu'une tasse destinée à contenir un ristretto, peut être disposée sur le support 4 et être alimentée en boisson, par exemple en café, à partir de la tête 3 de distribution sans risque d'éclaboussure, et une position basse dans laquelle un récipient de grande taille, tel qu'un mug, peut être disposé sur le support 4 et être alimenté en boisson, par exemple en eau, à partir de la tête 3 de distribution sans risque d'éclaboussure.

En fonctionnement, lorsque le bac 10 est rempli de capsules usagées, l'utilisateur retire le support 4 de récipient puis saisit la zone de préhension 21 formée par la plaque incurvée pour retirer le bac 10 et le réservoir 45. Lors de la translation du bac 10 le long de l'axe β, le volet 30 bascule vers l'extérieur du bac 10 sous l'action de son propre poids et également sous la pression des capsules usagées. La zone incurvée 31 du volet 30 glisse vers le bas sur la paroi arrière 42 du logement 41 et ainsi, le volet 30 passe de la position de collecte à la position d'évacuation pour augmenter l'espace de stockage 11. En conséquence, le niveau de remplissage peut donc diminuer dans le bac 10 pour ramener dans le bac 10 les éventuelles capsules qui auraient pu se situer au-dessus du bac 10, notamment dans la goulotte 40. On évite ainsi que les capsules collectées qui dépassent au-dessus du bac 10 interfèrent avec le bâti 2 lors du retrait du bac 10. Le volet 30 passe de la position de collecte à la position d'évacuation sur environ la moitié de la course nécessaire au retrait complet du bac 10 hors du logement 41. Chaque patte 34, 35 vient en appui sur chaque organe de butée 16, 17 pour maintenir le volet 30 dans la position d'évacuation. Une fois le bac 10 retiré du logement 41, l'utilisateur peut jeter les capsules usagées et replacer le bac 10 et le réservoir 45 dans le logement 41. Lorsque le bac 10 passe de la position retirée à la position insérée, la zone incurvée 31 du volet 30 glisse vers le haut sur la paroi arrière 42 du logement 41 et ainsi, le volet 30 passe de la position d'évacuation à la position de collecte. Une fois le bac 10 dans la position insérée, l'utilisateur replace le support 4 de récipient sur la plaque incurvée 21.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation, l'axe α de rotation du volet 30 est agencé à proximité de l'ouverture supérieure 12 du bac 10. L'organe d'appui 31 est formé par une partie basse du volet 30 et la paroi arrière 42 du logement 41 comporte dans une partie basse une excroissance s'étendant vers l'avant. L'excroissance pousse la partie basse du volet 30 vers l'intérieur du bac 10 pour faire passer le volet 30 de la position d'évacuation à la position de collecte. Dans la position d'évacuation, le volet 30 est sensiblement vertical et dans la position de collecte, le volet 30 est incliné vers l'intérieur du bac 10.

## Revendications

1. Machine de préparation de boissons (1) à partir d'un ingrédient contenu dans une capsule comprenant une unité (8) de préparation de boisson conçue pour accueillir, utiliser la capsule puis évacuer la capsule après usage et un bac (10) ayant une cavité formant un espace de stockage (11) pour collecter les capsules usagées, ladite machine de préparation de boissons (1) comportant un bâti (2) muni d'un logement (41) dans lequel le bac (10) est mobile entre une position insérée à l'intérieur dudit bâti (2) dans laquelle le bac (10) collecte les capsules usagées et une position retirée dudit bâti (2) dans laquelle le bac (10) est manipulable pour vider les capsules usagées collectées, **caractérisée en ce que** le bac (10) comporte un volet (30) mobile en rotation entre une position de collecte dans laquelle le volet (30) réduit l'espace de stockage (11) du bac (10) lorsque le bac (10) est dans la position insérée dans le bâti (2) et une position d'évacuation dans laquelle le volet (30) augmente l'espace de stockage (11) du bac (10) lorsque le bac (10) est dans la position retirée du bâti (2), le volet (30) comportant deux parois latérales (32, 33) qui sont agencées le long de deux parois latérales (14, 15) du bac (10) dans la position de collecte et qui s'étendent au-delà des deux parois latérales (14, 15) du bac (10) dans la position d'évacuation.

2. Machine de préparation de boissons (1) selon la revendication 1, **caractérisée en ce que** le volet (30) comporte un organe d'appui (31) et **en ce que** le logement (41) comporte une paroi arrière (42), l'organe d'appui (31) coopérant avec la paroi arrière (42) pour faire passer le volet (30) de la position de collecte à la position d'évacuation ou réciproquement.

3. Machine de préparation de boissons (1) selon la revendication 2, **caractérisée en ce que** l'organe d'appui est formé par une zone incurvée (31) du volet (30).

4. Machine de préparation de boissons (1) selon l'une quelconque des revendications 1 à 3, **caractérisée en ce que** le volet (30) est mobile en rotation autour d'un axe α et **en ce que** le bac (10) est mobile en translation le long d'un axe β, les axes α et β étant perpendiculaires.

5. Machine de préparation de boissons (1) selon la revendication 4, **caractérisée en ce que** le bac (10) comporte un fond (13) et **en ce que** l'axe α est agencé à proximité du fond (13).

6. Machine de préparation de boissons (1) selon la revendication 5, **caractérisée en ce que** le volet (30) comporte un centre de gravité et **en ce que** l'axe α est agencé de manière déportée par rapport au centre de gravité pour faire basculer le volet (30) en position d'évacuation sous l'action de son propre poids.

7. Machine de préparation de boissons (1) selon la revendication 6, **caractérisée en ce que** le fond (13) est muni d'un retour de matière (18) qui s'étend vers le haut et **en ce que** le volet (30) comporte une partie basse (36), la partie basse (36) venant en appui sur le retour de matière (18) pour maintenir le volet (30) en position de collecte.

8. Machine de préparation de boissons (1) selon l'une quelconque des revendications 1 à 7, **caractérisée en ce que** le bac (10) comporte une zone de préhension (21) agencée à l'avant dudit bac (10) et **en ce que** le volet (30) forme une paroi arrière dudit bac (10).

9. Machine de préparation de boissons (1) selon la revendication 1, **caractérisée en ce que** au moins une paroi latérale (14, 15) du bac (10) comporte un organe de butée (16, 17) et **en ce que** au moins une paroi latérale (32, 33) du volet (30) comporte une patte (34, 35), la patte (34, 35) venant en appui sur l'organe de butée (16, 17) pour maintenir le volet (30) en position d'évacuation.

10. Machine de préparation de boissons (1) selon l'une quelconque des revendications 1 à 9, **caractérisée en ce que** le bac (10) comporte un fond (13) muni d'au moins une perforation (19) et **en ce que** le bac (10) est agencé au-dessus d'un réservoir (45).
